(19) **Europäisches Patentamt / European Patent Office / Office européen des brevets**

(11) **EP 4 145 329 A1**

(12) **EUROPEAN PATENT APPLICATION**
published in accordance with Art. 153(4) EPC

(43) Date of publication:
**08.03.2023 Bulletin 2023/10**

(21) Application number: **20933429.1**

(22) Date of filing: **01.12.2020**

(51) International Patent Classification (IPC):
**G06F 30/20** $^{(2020.01)}$   **G01M 7/02** $^{(2006.01)}$
**G06F 30/10** $^{(2020.01)}$

(52) Cooperative Patent Classification (CPC):
**G01M 7/02; G06F 30/10; G06F 30/20;** Y02T 10/40;
Y02T 90/00

(86) International application number:
**PCT/JP2020/044637**

(87) International publication number:
**WO 2021/220543 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.04.2020   JP 2020078829**

(71) Applicant: **JFE Steel Corporation
Tokyo 100-0011 (JP)**

(72) Inventor: **SAITO, Takanobu
Tokyo 100-0011 (JP)**

(74) Representative: **Grünecker Patent- und
Rechtsanwälte
PartG mbB
Leopoldstraße 4
80802 München (DE)**

(54) **METHOD FOR ANALYZING OPTIMIZATION OF VEHICLE BODY JOINT POSITION, AND DEVICE**

(57)    An optimization analysis method for joining locations of an automotive body according to the present invention obtains optimal locations of additional joining points or joining portions for use in joining parts assemblies together in an automotive body model 31 and includes Step (S1) of obtaining a deformation form in a vibration mode occurring in the automotive body model 31 by frequency response analysis, Step (S3) of determining a load condition to be given to the automotive body model 31 in correspondence with the deformation form in the obtained vibration mode, Step (S7) of generating an optimization analysis model 51 in which additional joining candidates 53 are set at locations to be candidates for joining parts assemblies together, Step (S9) of setting an optimization analysis condition, and Step (S11) of giving the load condition determined at Step (S3) to the optimization analysis model 51 to perform optimization analysis and obtaining the additional joining candidates 53 satisfying the optimization analysis condition as optimized joining points 57.

FIG.1

EP 4 145 329 A1

**Description**

Field

The present invention relates to an optimization analysis method and an optimization analysis device for joining locations of an automotive body and, in particular, to an optimization analysis method and an optimization analysis device for joining locations of an automotive body obtaining optimized joining points or optimized joining portions joining parts assemblies together in an automotive body in order to improve dynamic stiffness related to the vibration performance of an automotive body of an automobile.

Background

As indicators of the stiffness of a structure, there are static stiffness and dynamic stiffness. The static stiffness increases if a spring constant increases, independent of the mass of the structure, according to Hooke's law. In contrast, the dynamic stiffness, when the shape of the structure periodically changes due to the input of a periodic load from a vibrating point, relates to its vibration performance. The dynamic stiffness in vibration of a single-degree of freedom system, for example, is evaluated by a frequency $\omega$ represented by $\omega = (K/M)^{0.5}$ using the stiffness K of the structure (corresponding to a stiffness matrix in the case of vibration of a multi-degree of freedom system) and the mass M of the structure, and if the frequency $\omega$ increases by an increase in the stiffness K, the dynamic stiffness improves.

However, even when the stiffness K of the structure increases, the frequency $\omega$ does not necessarily increase if the mass M increases, and in such a case the dynamic stiffness does not improve. Thus, to improve the dynamic stiffness, improving the stiffness K and the weight reduction of the structure (a reduction in the mass M) are effective. However, in general, if the mass M increases, the stiffness K also increases, so increasing stiffness K and the weight reduction are in conflict, and it is very difficult to achieve both at the same time. Thus, there have been many trial-and-error responses to optimize the vibration performance of the structure and to improve its dynamic stiffness.

In recent years, in the automotive industry in particular, the weight reduction of automotive bodies due to environmental issues has been promoting, and analysis by computer aided engineering (hereinafter referred to as "CAE analysis") has become an indispensable technology for automotive body design. This CAE analysis is known to achieve improvement in stiffness and a weight reduction using optimization techniques such as mathematical optimization, sheet thickness optimization, shape optimization, and topology optimization, and the CAE analysis is often used for structural optimization of castings, such as engine blocks, for example.

Among those optimization techniques, topology optimization in particular is gaining attention. Topology optimization is a method of providing a design space of a certain size in a structure, incorporating a three-dimensional element into the design space, and leaving a minimum necessary portion of the three-dimensional element satisfying given conditions to obtain an optimal shape satisfying the given conditions. Thus, for topology optimization, a method of directly performing restraint on and directly applying a load to the three-dimensional element making up the design space is used. As a technique about such topology optimization, Patent Literature 1 discloses a method for topology optimization of a component of a complex structure.

Citation List

Patent Literature

[Patent Literature 1] Japanese Patent Application Laid-open No. 2010-250818

Summary

Technical Problem

A structure such as an automotive body is formed by joining a plurality of parts together as a parts assembly by welding or the like, and it is known that increasing the amount of joining in regions joined as the parts assembly (an increase in the number of spot welding points, for example) improves the stiffness of the entire automotive body. However, from the viewpoint of cost, it is desirable to minimize the amount of joining as much as possible.

Given these circumstances, to improve the stiffness of the automotive body, as a method for obtaining joining locations for joining parts together (welding locations such as spot welding points or the like), there is a method for determining the joining locations based on experience or intuition or a method of determining regions in which stress is large to be the joining locations by stress analysis. However, the method for determining the joining locations based on experience or intuition does not look for locations required to improve stiffness to obtain the joining locations and may thus obtain unnecessary locations to be joining points, which must be inefficient from a cost aspect. In the method of determining regions in which stress is large to be the joining locations by stress analysis, the stiffness of the automotive body is changed compared to that before the joining locations are obtained by this method, but the stiffness only near the regions obtained to be the joining locations improves. On the other hand, however, there are many cases in which the stiffness of the other regions relatively decreases, and the joining locations obtained by this method is not necessarily optimal when the entire automotive body is evaluated.

When the joining locations obtained by the above method are used as spot welding points, for example, if the locations of adjacent spot welding points are too close to each other, during welding, current will flow to a spot welded point that was welded before (current shunt), and enough current will not flow to a spot welding point to be welded next, resulting in faulty welding.

Given these circumstances, it is conceivable to obtain the optimized joining locations by the optimization technique disclosed in Patent Literature 1. However, to improve the dynamic stiffness of the automotive body by the optimization technique, optimizing the joining locations with respect to the vibration of the automotive body is required. However, the optimization technique disclosed in the conventional Patent Literature 1 is a design method in a static state and does not target a vibrating automotive body for optimization, and thus the joining locations of the automotive body cannot be directly optimized.

The present invention has been made in view of the above problems, and an object thereof is to provide an optimization analysis method and an optimization analysis device for joining locations of an automotive body obtaining optimal locations of joining points or joining portions joining parts assemblies together in the automotive body in order to improve dynamic stiffness related to the vibration performance of the automotive body.

Solution to Problem

An optimization analysis method for joining locations of an automotive body according to a first aspect of the present invention causes a computer to perform, for an automotive body model of an automobile having a plurality of parts including a two-dimensional element and/or a three-dimensional element and having joining points or joining portions joining the parts together as a parts assembly, steps below to obtain optimized locations of point joining or continuous joining for use in joining the parts assemblies together, and includes: a frequency response analysis step of giving a certain excitation condition to the automotive body model to perform frequency response analysis and obtaining a vibration mode occurring in the automotive body model and a deformation form in the vibration mode; a load condition determination step of determining a load condition to be given to the automotive body model corresponding to the deformation form in the obtained vibration mode; an optimization analysis model generation step of generating an optimization analysis model in which joining candidates to be candidates for joining the parts assemblies together are set in the automotive body model; an optimization analysis condition setting step of setting an optimization analysis condition for performing optimization analysis of the joining candidates in the generated optimization analysis model; and an optimization analysis step of giving the load condition determined at the load condition determination step to the optimization analysis model having set the optimization analysis condition to perform optimization analysis and obtaining the joining candidates satisfying the optimization analysis condition as optimized joining points or optimized joining portions joining the parts assemblies together.

An optimization analysis method for joining locations of an automotive body according to a second aspect of the present invention causes a computer to perform, for an automotive body model of an automobile having a plurality of parts including a two-dimensional element and/or a three-dimensional element and having joining points or joining portions joining the parts together as a parts assembly, steps below to obtain optimized locations of point joining or continuous joining for use in joining the parts assemblies together, and includes: a characteristic value analysis step of performing characteristic value analysis of the automotive body model to obtain a vibration mode occurring in the automotive body model and a deformation form in the vibration mode; a load condition determination step of determining a load condition to be given to the automotive body model corresponding to the deformation form in the obtained vibration mode; an optimization analysis model generation step of generating an optimization analysis model in which joining candidates to be candidates for joining the parts assemblies together are set in the automotive body model; an optimization analysis condition setting step of setting an optimization analysis condition for performing optimization analysis of the joining candidates in the generated optimization analysis model; and an optimization analysis step of giving the load condition determined at the load condition determination step to the optimization analysis model having set the optimization analysis condition to perform optimization analysis and obtaining the joining candidates satisfying the optimization analysis condition as optimized joining points or optimized joining portions joining the parts assemblies together.

An optimization analysis device for joining locations of an automotive body according to the first aspect of the present invention is configured to obtain, for an automotive body model of an automobile having a plurality of parts including a two-dimensional element and/or a three-dimensional element and having joining points or joining portions joining the parts together as a parts assembly, optimized locations of point joining or continuous joining for use in joining the parts assemblies together, and includes: a frequency response analysis unit configured to give a certain excitation condition to the automotive body model to perform frequency response analysis, and obtain a vibration mode occurring in the automotive body model and a deformation form in the vibration mode; a load condition determination unit configured to determine a load condition to be given to the automotive body model corresponding to the deformation form in the obtained vibration mode; an optimization analysis model generation unit configured to generate an optimization analysis model in which joining candidates to be candidates for joining the parts assemblies together are set in the automotive body model; an optimization analysis condition setting unit configured to set an optimization analysis condition for performing optimization analysis of the joining candidates in the generated optimization analysis model; and an optimization analysis unit configured to give the load condition determined by the load condition determination unit to the optimization analysis model having set the optimization analysis condition to perform optimization analysis, and obtain the joining candidates satisfying the optimization analysis condition as optimized joining points or optimized joining portions joining the parts assemblies together.

An optimization analysis device for joining locations of an automotive body according to the second aspect of the present invention is configured to obtain, for an automotive body model of an automobile having a plurality of parts including a two-dimensional element and/or a three-dimensional element and having joining points or joining portions joining the parts together as a parts assembly, optimized locations of point joining or continuous joining for use in joining the parts assemblies together, and includes: a characteristic value analysis unit configured to perform characteristic value analysis of the automotive body model to obtain a vibration mode occurring in the automotive body model and a deformation form in the vibration mode; a load condition determination unit configured to determine a load condition to be given to the automotive body model corresponding to the deformation form in the obtained vibration mode; an optimization analysis model generation unit configured to generate an optimization analysis model in which joining candidates to be candidates for joining the parts assemblies together are set in the automotive body model; an optimization analysis condition setting unit configured to set an optimization analysis condition for performing optimization analysis of the joining candidates in the generated optimization analysis model; and an optimization analysis unit configured to give the load condition determined by the load condition determination unit to the optimization analysis model having set the optimization analysis condition to perform optimization analysis, and obtain the joining candidates satisfying the optimization analysis condition as optimized joining points or optimized joining portions joining the parts assemblies together. Advantageous Effects of Invention

The present invention can obtain optimal locations for point joining or continuous joining in which parts assemblies are joined together in order to improve dynamic stiffness related to the vibration performance of an automotive body model.

Brief Description of Drawings

FIG. 1 is a block diagram of an optimization analysis device for joining locations of an automotive body according to an embodiment of the present invention.

FIG. 2 is a side view and a perspective view of joining points set in advance in an automotive body model to be analyzed by the present embodiment and additional joining candidates to be candidates for optimization for the automotive body model ((a): the joining points set in advance and (b): the additional joining candidates).

FIG. 3 is a perspective view illustrating how the automotive body model is deformed in a vibration mode obtained by frequency response analysis in the embodiment of the present invention ((a) a torsional mode and (b) a bending mode).

FIG. 4 is a diagram of the type of a load condition selected as a load condition corresponding to a deformation form in the vibration mode obtained by the frequency response analysis in the embodiment of the present invention.

FIG. 5 is a perspective view of a load condition of an automotive body model corresponding to the deformation form in the vibration mode obtained by the frequency response analysis and the deformation of the automotive body model to which the load condition is applied in the embodiment of the present invention ((a) the load condition and (b) the deformation state of the automotive body model).

FIG. 6 is an illustrative diagram illustrating generation of joining candidates to be targeted for optimization analysis and selection of optimized joining points in the optimization analysis in the present embodiment ((a): joining points set in advance in a parts assembly, (b): generation of additional joining candidates, and (c): selection of the optimized joining points).

FIG. 7 is a flow diagram of a processing procedure of an optimization analysis method for joining locations of an automotive body according to the embodiment of the present invention.

FIG. 8 is a block diagram of an optimization analysis device for joining locations of an automotive body according to another aspect of the embodiment of the present invention.

FIG. 9 is a flow diagram of a processing procedure of the optimization analysis method for joining locations of an automotive body according to the other aspect of the embodiment of the present invention.

FIG. 10 is a perspective view illustrating how the automotive body model is deformed in a vibration mode determined by characteristic value analysis in the other aspect of the embodiment of the present invention ((a) a torsional mode and (b) a bending mode).

FIG. 11 is a side view and a perspective view of additional optimized joining points optimized under the load condition corresponding to the deformation form in the torsional mode obtained by the frequency response analysis ((a) 200 points and (b) 400 points).

FIG. 12 is a side view and a perspective view of additional optimized joining points optimized under the load condition corresponding to the deformation form in the torsional mode obtained by the frequency response analysis ((a) 600 points and (b) 1,000 points).

FIG. 13 is a side view and a perspective view of additional optimized joining points optimized under the load condition corresponding to the deformation form in the torsional mode obtained by the frequency response analysis ((a) 2,000 points and (b) 4,000 points).

FIG. 14 is a side view and a perspective view of additional optimized joining points optimized under the load condition corresponding to the deformation form in the torsional mode obtained by the frequency response analysis (6,000 points).

FIG. 15 is a side view and a perspective view of additional optimized joining points optimized under the load condition corresponding to the deformation form in the bending mode obtained by the frequency response analysis ((a) 200 points and (b) 400 points).

FIG. 16 is a side view and a perspective view of additional optimized joining points optimized under the load condition corresponding to the deformation form in the bending mode obtained by the frequency response analysis ((a) 600 points and (b) 1,000 points).

FIG. 17 is a side view and a perspective view of additional optimized joining points optimized under the load condition corresponding to the deformation form in the bending mode obtained by the frequency response analysis ((a) 2,000 points and (b) 4,000 points).

FIG. 18 is a side view and a perspective view of additional optimized joining points optimized under the load condition corresponding to the deformation form in the bending mode obtained by the frequency response analysis (6,000 points).

FIG. 19 is a graph of a frequency response of an optimization analysis model in which the additional optimized joining points optimized under the load condition corresponding to the deformation form in the torsional mode obtained by the frequency response analysis are set.

FIG. 20 is a graph of a frequency response of the optimization analysis model in which the additional optimized joining points optimized under the load condition corresponding to the deformation form in the bending mode obtained by the frequency response analysis are set.

FIG. 21 is a graph of a relation between the number of joining points of the additional optimized joining points optimized under the load condition corresponding to the deformation form in the torsional mode obtained by the frequency response analysis and a frequency change rate.

FIG. 22 is a graph of a relation between the number of joining points of the additional optimized joining points optimized by giving the load condition corresponding to the deformation form in the bending mode obtained by the frequency response analysis and the frequency change rate.

FIG. 23 is a graph of a relation between the number of joining points of the additional optimized joining points optimized under the load condition corresponding to the deformation form in the torsional mode obtained by the characteristic value analysis and the frequency change rate.

FIG. 24 is a graph of a relation between the number of joining points of the additional optimized joining points optimized under the load condition corresponding to the deformation form in the bending mode obtained by the characteristic value analysis and the frequency change rate.

Description of Embodiments

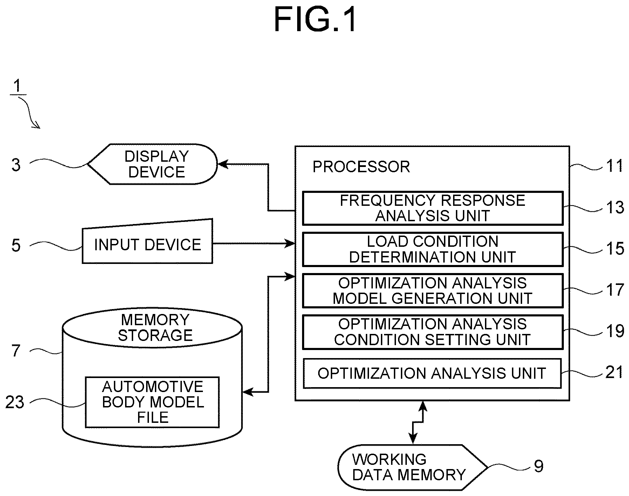

The following describes an optimization analysis method and an optimization analysis device for joining locations of an automotive body according to an embodiment of the present invention with reference to FIG. 1 to FIG. 10. Prior to the description of the optimization analysis method and the optimization analysis device for joining locations of an automotive body, the following describes an automotive body model covered by the present invention.

<Automotive Body Model>

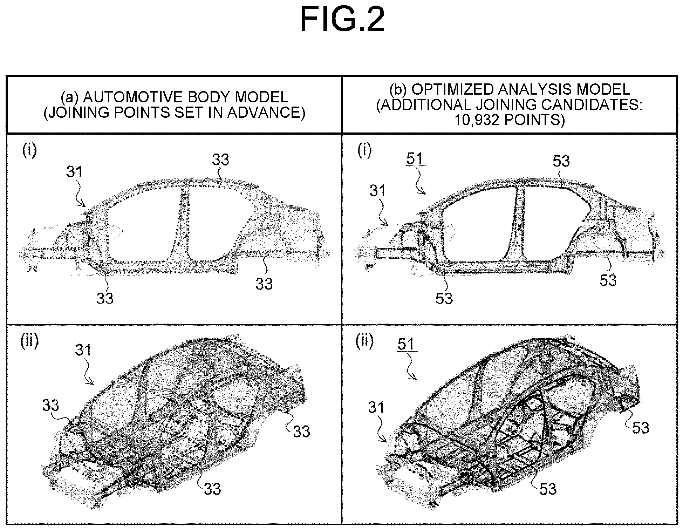

The automotive body model covered by the present invention includes a plurality of parts such as body frame parts and chassis parts. Each part of an automotive body model 31, illustrated as an example in FIG. 2(a), is modeled using a two-dimensional element and/or a three-dimensional element, and joining points and/or joining portions are set in advance in regions in which these parts are joined together as a parts assembly. In the automotive body model 31 in which the parts are joined together by spot welding as the parts assembly, for example, as illustrated in FIG. 2(a), joining points 33 are set in advance at locations to be spot welded.

The present invention analyzes deformation behavior and vibration behavior caused by loads acting on the automotive body model 31, and thus each part in the automotive body model 31 is modeled as an elastic material, a viscoelastic material, or an elastoplastic material. The material properties and element information of each part making up the automotive body model 31 and information on the joining points 33 (FIG. 2(a)) or the like in each parts assembly are stored in an automotive body model file 23 (refer to FIG. 1).

<Optimization Analysis Device for Joining Locations of Automotive Body>

The following describes a configuration of an optimization analysis device for joining locations of an automotive body according to the embodiment of the present invention (hereinafter simply referred to as an "optimization analysis device").

As illustrated in FIG. 1, an optimization analysis device 1 according to the present embodiment includes a personal computer (PC) or the like and has a display device 3, an input device 5, a memory storage 7, a working data memory 9, and a processor 11. The display device 3, the input device 5, the memory storage 7, and the working data memory 9 are connected to the processor 11 and execute their respective functions based on instructions from the processor 11.

The following describes the functions of the respective components of the optimization analysis device 1 according to the present embodiment with a case in which optimized joining points joining parts assemblies together are obtained in addition to joining points 33 set in advance of the automotive body model 31 as an example using the automotive body model 31 illustrated in FIG. 2(a).

<<Display Device>>

The display device 3 is used to display analysis results or the like and includes an LCD monitor.

<<Input Device>>

The input device 5 is used for an instruction to display the automotive body model file 23, input by an operator, and the like and includes a keyboard, a mouse, and the like.

<<Memory Storage>>

The memory storage 7 is used to store therein various files such as the automotive body model file 23 and includes a hard disk or the like.

<<Working Data Memory>>

The working data memory 9 is used for temporary storage or computation of data to be used by the processor 11 and includes a random access memory (RAM) or the like.

<<Processor>>

As illustrated in FIG. 1, the processor 11 includes a frequency response analysis unit 13, a load condition determination unit 15, an optimization analysis model generation unit 17, an optimization analysis condition setting unit 19, and an optimization analysis unit 21 and is constituted bya central processing unit (CPU) such as the PC(personal computer). These units are functioned by the CPU executing a certain computer program. The following describes the functions of the respective units of the processor 11.

(Frequency Response Analysis Unit)

The frequency response analysis unit 13 gives a certain excitation condition to the automotive body model 31 to perform frequency response analysis and obtains a vibration mode occurring in the automotive body model 31 and a deformation form in the vibration mode.

The frequency response analysis is an analytical method to, when an excitation condition inputting a stationary sine wave load is given to a structure, obtain a vibration mode representing the displacement or the like of the structure and a deformation form in the vibration mode. In an example of the frequency response analysis in the present embodiment, the excitation condition inputting sine wave loads to right and left rear suspension mounting parts of the automotive body model 31 in an automotive body up direction was given.

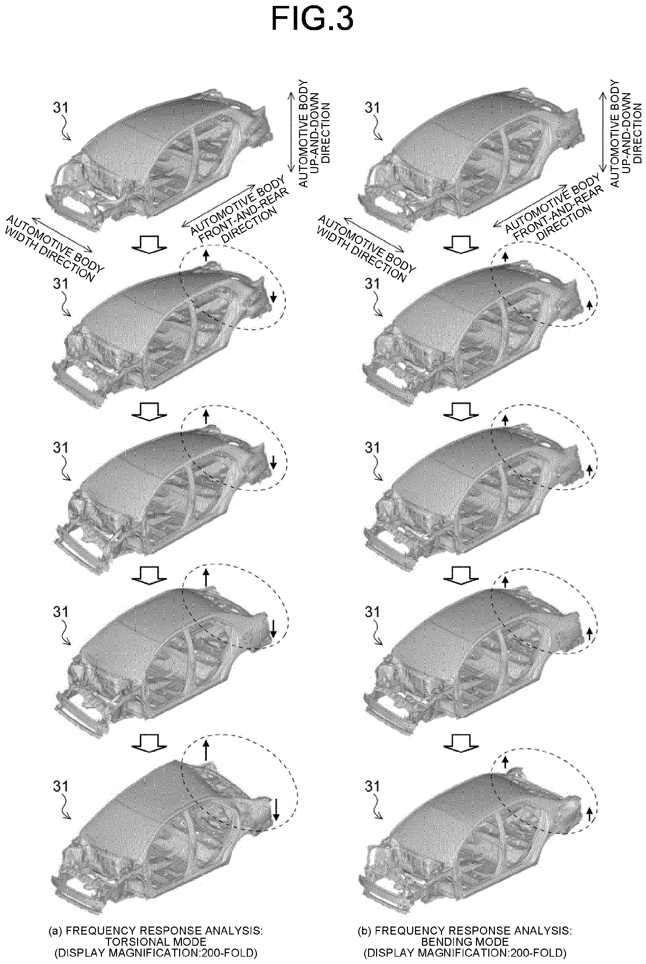

FIG. 3 illustrates, as an example, how the automotive body model 31 is deformed in each of a torsional and a bending mode, which are the vibration mode determined by the frequency response analysis. In the torsional mode illustrated in FIG. 3(a), the rear side of the automotive body model 31 (the region enclosed by the dashed oval in the drawing) is deformed in opposite directions in an automotive body up-and-down direction between right and left. On the other hand, in the bending mode illustrated in FIG. 3(b), the rear side of the automotive body model 31 (the region enclosed by the dashed oval in the drawing) is deformed in the automotive body up direction both on right and left.

The excitation condition given in the frequency response analysis by the frequency response analysis unit 13 is not limited to the above, and the excitation condition may be given as appropriate in accordance with the deformation of the target automotive body model 31.

(Load Condition Determination Unit)

The load condition determination unit 15 determines a load condition (position, direction, and magnitude in which a load is applied) to be given to the automotive body model 31 corresponding to the deformation form in the vibration mode obtained by the frequency response analysis unit 13. The deformation form in the vibration mode may be the deformation of the automotive body model 31 at the time when the sum of the displacement of the automotive body model 31 becomes the maximum, for example.

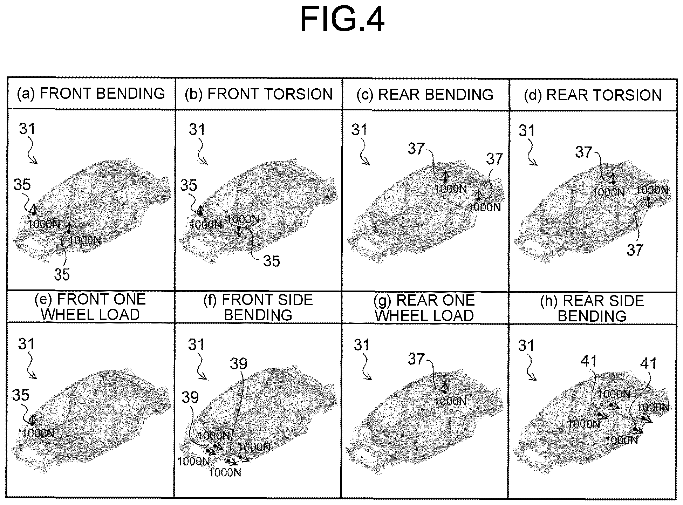

In the present embodiment, the load condition determined by the load condition determination unit 15 was selected out of eight load conditions (a) to (h) illustrated in FIG. 4. These load conditions (a) to (h) other than the magnitude of the loads are load conditions generally given in stiffness analysis or the like of the automotive body model 31.

The load conditions (a) to (h) illustrated in FIG. 4 are each as follows.

(a) Front bending: This is a load condition in which loads in the same direction are applied to both right and left front suspension mounting parts 35 in the automotive body up direction (or an automotive body down direction).

(b) Front torsion: This is a load condition in which a load in the automotive body up direction is applied to one of the right and left front suspension mounting parts 35, whereas a load in the automotive body down direction is applied to the other front suspension mounting part 35.

(c) Rear bending: This is a load condition in which loads in the same direction are applied to both right and left rear suspension mounting parts 37 in the automotive body up direction (or the automotive body down direction).

(d) Rear torsion: This is a load condition in which a load in the automotive body up direction is applied to one of the right and left rear suspension mounting parts 37, whereas a load in the automotive body down direction is applied to the other rear suspension mounting part 37.

(e) Front one wheel load: This is a load condition in which a load in the automotive body up direction (or the automotive body down direction) is applied to either one of the right and left front suspension mounting parts 35.

(f) Front side bending: This is a load condition in which a load in an automotive body width direction is applied to a front subframe mounting part 39.

(g) Rear one wheel load: This is a load condition in which a load in the automotive body up direction (or the automotive body down direction) is applied to either one of the right and left rear suspension mounting parts 37.

(h) Rear side bending: This is a load condition in which a load in the automotive body width direction is applied to a rear subframe mounting part 41.

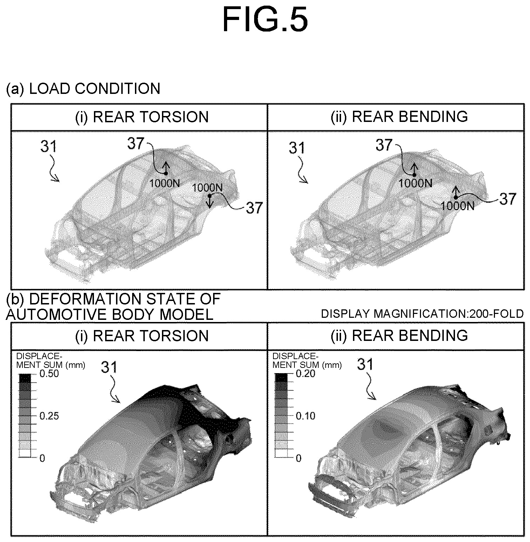

As an example of the deformation of the automotive body model 31 to which these load conditions are given, FIG. 5 illustrates deformation when the load condition of rear torsion and rear bending is given to the automotive body model 31. FIG. 5(a) illustrates the load condition (position, direction, and magnitude in which a load is applied) to be given to the automotive body model 31, whereas FIG. 5(b) is a contour diagram of the sum of displacement having occurred in the automotive body model 31 by applying the load condition (a value obtained by taking the square root of the square of displacement in each direction of an automotive body front-and-rear direction, the automotive body width direction, and the automotive body up-and-down direction). Note that contour diagrams of the deformation of the automotive body model 31 to which the other load conditions illustrated in FIG. 4 are applied are omitted.

When rear torsion (FIG. 5(a)(i)) is given as the load condition, the rear side of the automotive body model 31 is deformed in opposite directions in the automotive body up-and-down direction between right and left (FIG. 5(b)(i)). Thus, when the vibration mode determined by the frequency response analysis unit 13 is the torsional mode illustrated in FIG. 3(a), the load condition determination unit 15 selects FIG. 4(d) rear torsion as the load condition.

On the other hand, when rear bending (FIG. 5(a)(ii)) is given as the load condition, the rear side of the automotive body model 31 is deformed in the automotive body up direction both on right and left (FIG. 5(b)(ii)). Thus, when the vibration mode determined by the frequency response analysis unit 13 is the bending mode illustrated in FIG. 3(b), the load condition determination unit 15 selects FIG. 4(c) rear bending as the load condition.

Thus, by setting in advance how the automotive body model 31, when each of the load conditions illustrated in FIG. 4 is given, is deformed, the load condition determination unit 15 can select the load condition to be given to the automotive body model 31 corresponding to the deformation form in the vibration mode determined by the frequency response analysis unit 13 out of these load conditions.

Note that the load condition determined by the load condition determination unit 15 is not limited to one giving loads in the directions illustrated in FIG. 4 and may be one giving loads in the opposite directions. The load condition of rear torsion illustrated in FIG. 4(d), for example, may be one giving a load to each of the right and left rear suspension mounting parts 37 on the rear side of the automotive body model 31 (refer to FIG. 5(a)) in a direction opposite to the direction of the load illustrated in FIG. 4(d) in the automotive body up-and-down direction.

(Optimization Analysis Model Generation Unit)

The optimization analysis model generation unit 17 sets additional joining candidates 53 to the automotive body model 31 to generate an optimization analysis model 51 to be analyzed by optimization analysis as illustrated in FIG. 2(b).

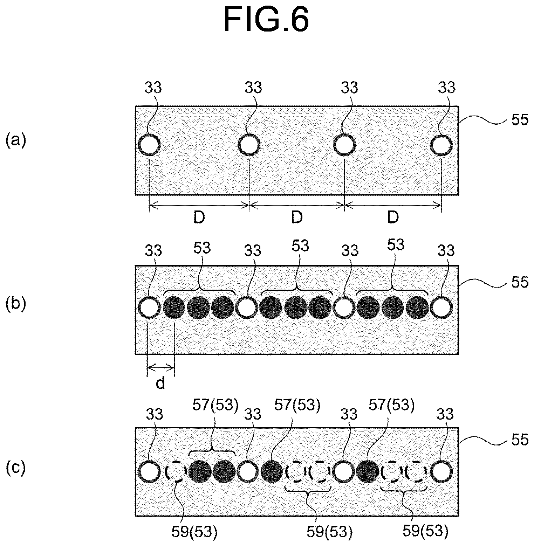

The joining candidates 53 in the optimization analysis model 51 are generated by the processing illustrated in FIG. 6.

First, in the automotive body model 31, as illustrated in FIG. 6(a), the joining points 33 are set in advance at certain intervals D in a parts assembly 55 with a plurality of parts (not illustrated) making up the automotive body model 31 joined together. The optimization analysis model generation unit 17 then densely generates the additional joining candidates 53 at certain intervals d (<D) between the joining points 33 as illustrated in FIG. 6(b).

FIG. 2(b) illustrates the optimization analysis model 51 in which the joining candidates 53 are generated in the automotive body model 31. Note that in the optimization analysis model 51 illustrated in FIG. 2(b), the joining points 33 (FIG. 2(a)) set in advance in the automotive body model 31 are omitted.

(Optimization Analysis Condition Setting Unit)

The optimization analysis condition setting unit 19 sets an optimization analysis condition for performing optimization analysis with the additional joining candidates 53, which is set in the optimization analysis model 51 generated by the optimization analysis model generation unit 17 and targeted for optimization.

Two types of the optimization analysis condition, or objectives and constraints, are set. The objectives are the optimization analysis condition set in accordance with the object of the optimization analysis and includes minimizing strain energy and maximizing absorbed energy to minimize generated stress, for example. Only one of the objectives is set. The constraints are constraints imposed on performing the optimization analysis, including causing the optimization analysis model 51 generated from the automotive body model 31 after joining the parts together to have certain stiffness and the proportion (or the number of points) of the additional optimal joining points, for example. The constraints can be set.

(Optimization Analysis Unit)

The optimization analysis unit 21 gives the load condition determined by the load condition determination unit 15 to the optimization analysis model 51 to perform the optimization analysis and obtains the additional joining candidates 53 satisfying the optimization analysis condition as the optimized joining points joining the parts assemblies together. Specifically, among the joining candidates 53 in the optimization analysis model 51, the additional joining candidates 53 satisfying the optimization analysis condition (the objectives and the constraints) set by the optimization analysis condition setting unit 19 are selected as the optimized joining points.

In the parts assembly 55 in which the joining points 33 are set in advance as illustrated in FIG. 6(a), for example, when the additional joining candidates 53 set between the joining points 33 as illustrated in FIG. 6(b) are targeted for optimization, the optimization analysis unit 21, as illustrated in FIG. 6(c), selects the joining candidates 53 satisfying the optimization analysis condition as optimized joining points 57 and deletes the joining candidates 53 having not been selected as erasing joining points 59.

Note that topology optimization can be applied to the optimization analysis by the optimization analysis unit 21. When there are many intermediate densities when using the density method (densimetry) in the topology optimization, it is preferable to discretize them as represented by Expression (1).

$$\mathrm{K}'(\rho) = \rho^{\mathrm{p}}\mathrm{K} \qquad\qquad (1)$$

where,

K': Stiffness matrix with penalty imposed on stiffness matrix of element
K: Stiffness matrix of element
$\rho$: Normalized density
p: Penalty coefficient

The penalty coefficient often used for discretization is 2 or more, but in the optimization of the joining locations according to the present invention, the penalty coefficient is preferably 4 or more.

The optimization analysis unit 21 may perform optimization processing by the topology optimization or perform the optimization processing by other methods of calculation. As the optimization analysis unit 21, commercially available optimization analysis software using the finite element method (FEM) can be used, for example.

In the optimization analysis by the optimization analysis unit 21, inertia force acting during traveling of an automobile is taken into account by the inertia relief method. The inertia relief method is an analytical method to obtain stresses and strains from force acting on an object in constant acceleration motion with the object supported at a support point as the reference of coordinates for the inertia force (free support) and is being used for static analysis of airplanes or ships in motion.

<Optimization Analysis Method for Joining Locations of Automotive body>

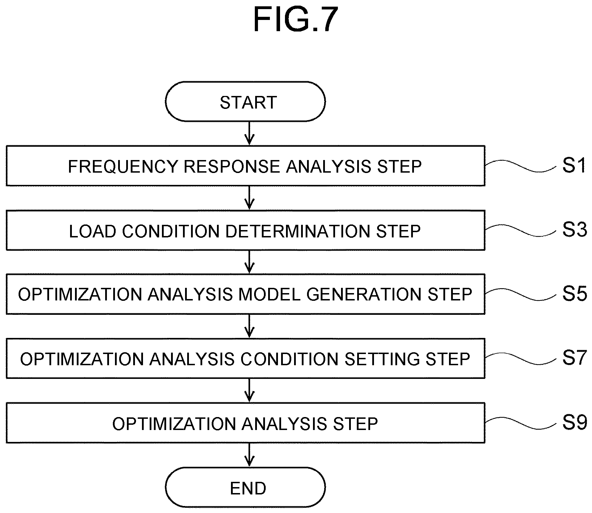

An optimization analysis method for joining locations of an automotive body according to the embodiment of the present invention (hereinafter simply referred to as an "optimization analysis method") performs optimization analysis, for the automotive body model 31 of an automobile (FIG. 2(a)) having a plurality of parts including a two-dimensional element and/or a three-dimensional element and having in advance joining points joining the parts together as a parts assembly, obtaining the optimal locations of point joining to be added for use in joining the parts assemblies together. As illustrated in FIG. 7, this optimization analysis method includes a frequency response analysis step S1, a load condition determination step S3, an optimization analysis model generation step S5, an optimization analysis condition setting step S7, and an optimization analysis step S9. The following describes these steps. The optimization analysis device 1 (FIG. 1) including a computer performs the steps.

<<Frequency Response Analysis Step>>

The frequency response analysis step S1 is a step of giving a certain excitation condition to the automotive body model 31 to perform frequency response analysis and obtaining a vibration mode occurring in the automotive body model 31 and a deformation form in the vibration mode and is performed by the frequency response analysis unit 13 in the optimization analysis device 1 illustrated in FIG. 1.

As an example of the excitation condition in the frequency response analysis, in the present embodiment, the excitation condition inputting sine wave loads to the rear suspension mounting parts 37 of the automotive body model 31 (refer to FIG. 4(c)) in the automotive body up direction was given.

The excitation condition given in the frequency response analysis at the frequency response analysis step S1 is not limited to the above, and the excitation condition may be given as appropriate in accordance with the deformation of the target automotive body model 31.

<<Load Condition Determination Step>>

The load condition determination step S3 is a step of determining a load condition (position, direction, and magnitude in which a load is applied) to be given to the automotive body model 31 in correspondence with the deformation form in the vibration mode obtained at the frequency response analysis step S1 and is performed by the load condition determination unit 15 in the optimization analysis device 1 illustrated in FIG. 1.

In the optimization analysis method according to the present embodiment, the load condition determination step S3 selected one or a plurality of load conditions out of the eight load conditions (a) to (h) illustrated in FIG. 4. However, the load condition determination step S3 may change the position of the load input to the automotive body model 31 (the front suspension mounting part 35, the rear suspension mounting part 37, or the like) and the direction and magnitude of the load as appropriate to obtain the load condition that can better give the deformation form in the vibration mode obtained at the frequency response analysis step S1 to the automotive body model 31.

<<Optimization Analysis Model Generation Step>>

The optimization analysis model generation step S5 is a step of setting the additional joining candidates 53 to be candidates joining the parts of the automotive body model 31 as a parts assembly and generating the optimization analysis model 51 to be analyzed by the optimization analysis as illustrated in FIG. 2(b) and is performed by the optimization analysis model generation unit 17 in the optimization analysis device 1 illustrated in FIG. 1.

In the present embodiment, the optimization analysis model generation step S5 generated the additional joining candidates 53 in the optimization analysis model 51 by the procedure illustrated in FIG. 6.

<<Optimization Analysis Condition Setting Step>>

The optimization analysis condition setting step S7 is a step of setting an optimization analysis condition for performing the optimization analysis with the additional joining candidates 53,which is set in the optimization analysis model 51 generated at the optimization analysis model generation step S5 and targeted for optimization, and is performed by the optimization analysis condition setting unit 19 in the optimization analysis device 1 illustrated in FIG. 1. As the optimization analysis condition, the objectives and the constraints are set as described above.

<<Optimization Analysis Step>>

The optimization analysis step S9 is a step of giving the load condition determined at the load condition determination step S3 to the optimization analysis model 51 to perform the optimization analysis and obtaining the additional joining candidates 53 satisfying the optimization analysis condition set at the optimization analysis condition setting step S7 to be the optimized joining points joining the parts assemblies together, and is performed by the optimization analysis unit 21 in the optimization analysis device 1 illustrated in FIG. 1.

As a procedure obtaining the optimized joining points at the optimization analysis step S9, when the additional joining candidates 53 illustrated in FIG. 6(b) are targeted for optimization, as illustrated in FIG. 6(c), the additional joining candidates 53 satisfying the optimization analysis condition are selected as the optimized joining points 57, whereas the joining candidates 53 having not been selected are erased as the erasing joining points 59.

Topology optimization can be applied to the optimization analysis at the optimization analysis step S9. Furthermore, when densimetry is applied in the topology optimization, it is preferable to perform discretization with the value of the element penalty coefficient set to 4 or more.

Furthermore, in the optimization analysis, the inertia force acting on the automotive body model 31 is taken into account using the inertia relief method.

As in the above, the optimization analysis method and the optimization analysis device for joining locations of an automotive body according to the present embodiment determine, in the automotive body model 31 of an automobile having the joining points 33 joining in advance the parts together as the parts assembly (FIG. 2), the load condition corresponding to the deformation form in the vibration mode of the automotive body model 31 and give the obtained load condition to the automotive body model 31 to determine the additional optimized joining points or joining portions to be set in the automotive body model 31. This can obtain optimal locations of the joining points or joining portions joining the parts assemblies together in order to improve the dynamic stiffness of the automotive body model 31.

While the optimization analysis method and the optimization analysis device for joining locations of an automotive body according to the present embodiment described above obtain the deformation form in the vibration mode having occurred in the automotive body model by the frequency response analysis, another aspect of the present embodiment obtains the deformation form in the vibration mode having occurred in the automotive body model by characteristic value analysis in place of the frequency response analysis.

The characteristic value analysis is an analytical method to obtain a characteristic frequency or a characteristic mode (a vibration mode), which is a vibrational characteristic of a structure. In the characteristic value analysis, the deformation form in the vibration mode can be obtained without requiring the excitation condition (input loads).

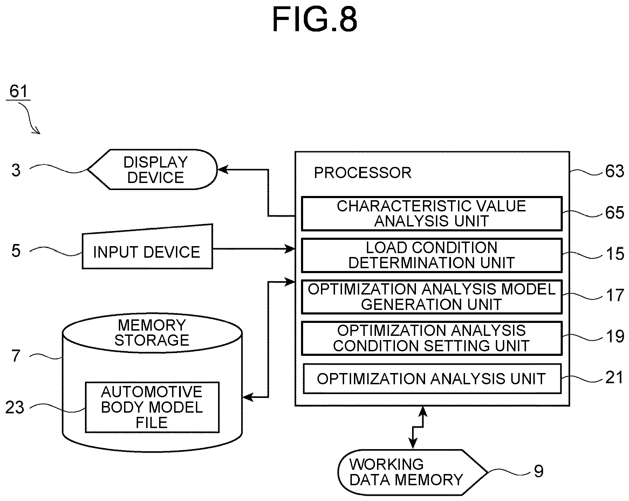

FIG. 8 illustrates a block diagram of an optimization analysis device 61 according to the other aspect of the present embodiment. A processor 63 of the optimization analysis device 61 has a characteristic value analysis unit 65 performing the characteristic value analysis of the automotive body model 31 in place of the frequency response analysis unit 13 in the processor 11 of the optimization analysis device 1 (FIG. 1), and the components other than the characteristic value analysis unit 65 have the respective same functions as those of the components of the optimization analysis device 1 described above other than the frequency response analysis unit 13.

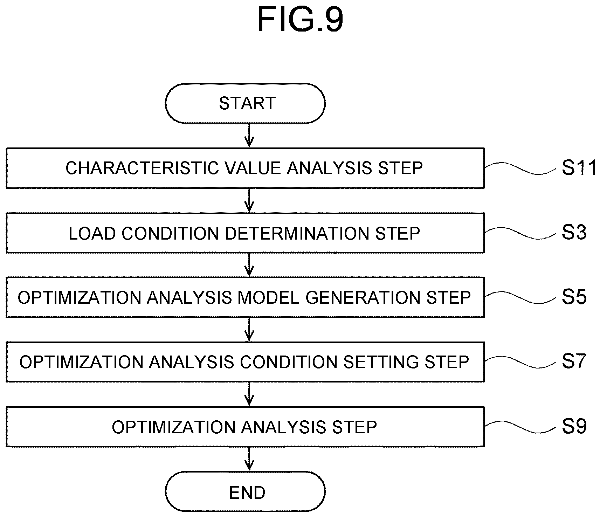

Furthermore, FIG. 9 illustrates a processing procedure of the optimization analysis method according to the other aspect of the present embodiment. The steps other than a characteristic value analysis step S11 in FIG. 9 perform the respective same pieces of processing as those at the steps other than the frequency response analysis step S1 illustrated in FIG. 7 described above.

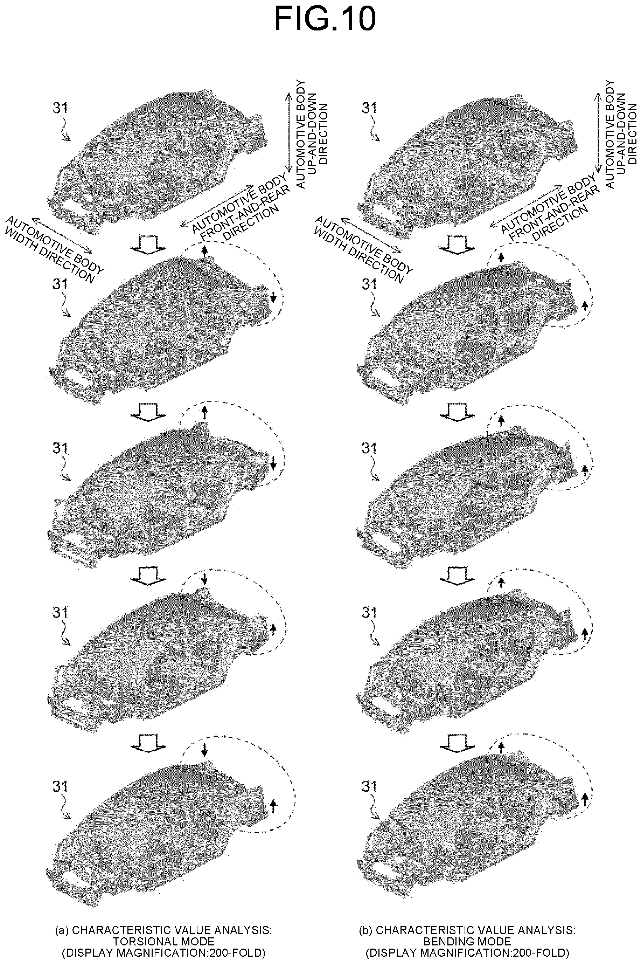

In the optimization analysis method and the optimization analysis device for joining locations of an automotive body according to such another aspect of the present embodiment, too, as illustrated in FIG. 10, the torsional mode and the bending mode as the vibration mode occurring in the automotive body model 31 can be obtained by the characteristic value analysis.

Then, the load condition to be given to the automotive body model 31 is determined in correspondence with the deformation form in the vibration mode determined by the characteristic value analysis, and the determined load condition is given to the optimization analysis model 51 (FIG. 2(b)) to perform the optimization analysis, and thereby additional optimized joining points of the parts assembly in the automotive body model 31 can be obtained.

While the above description obtains the optimized joining points to be added to the joining points 33 set in advance in the automotive body model 31, the present invention may select at least one or preferably four or more joining points for each parts assembly out of the joining points 33 set in advance in the automotive body model 31 as fixed points and perform the optimization analysis with joining points having not been selected as the fixed points included to be targeted for optimization in addition to the joining candidates densely generated between the joining points set in advance to obtain the optimized joining points joining the parts assemblies together. In this case, the locations of point joining satisfying certain dynamic stiffness can be obtained with fewer number of points of joining points.

Furthermore, while the above description targets the joining points joining the parts together as the parts assembly by spot welding, the present invention is not limited to the case of obtaining the locations of point joining by spot welding and can also be applied to a case in which optimized joining portions are obtained with joining portions joining parts assemblies together by continuous joining such as laser welding or arc welding targeted for optimization to obtain optimized joining locations by continuous joining.

[Example]

The following analysis was conducted to confirm the effect of the present invention, which is described below. In the present example, for the automotive body model 31 in which the joining points 33 joining the parts together as the parts assembly as illustrated in FIG. 2(a) are set in advance is targeted, optimized joining points performing joining in addition to the joining points 33 were obtained by the optimization analysis.

First, the frequency response analysis and the characteristic value analysis were performed on the automotive body model 31 to obtain the vibration mode occurring in the automotive body model 31. In the present example, in both the frequency response analysis and the characteristic value analysis, the vibration mode was the torsional mode (refer to FIG. 3(a) and FIG. 10(a)) and the bending mode (refer to FIG. 3(b) and FIG. 10(b)).

Next, the load condition (location, direction, and magnitude in which a load is applied) to be given to the automotive body model 31 corresponding to the deformation form in each of the bending mode and the torsional mode was determined. In determining the load condition, out of the eight load conditions illustrated in FIG. 4, the load condition of rear torsion (FIG. 4(d)) and the load condition of rear bending (FIG. 4(c)) were selected for the torsional mode and the bending mode, respectively.

Subsequently, the joining candidates 53 were additionally set in the automotive body model 31 to generate the optimization analysis model 51. In setting the joining candidates 53, they were generated densely at certain intervals (10 mm) between the joining points 33 that had been set in advance in the automotive body model 31.

Then, an objective and a constraint were each set as the optimization analysis condition for the optimization analysis model 51. In the present example, the objective was minimizing compliance (maximizing stiffness), whereas the constraint was the number of points of joining points to be caused to remain.

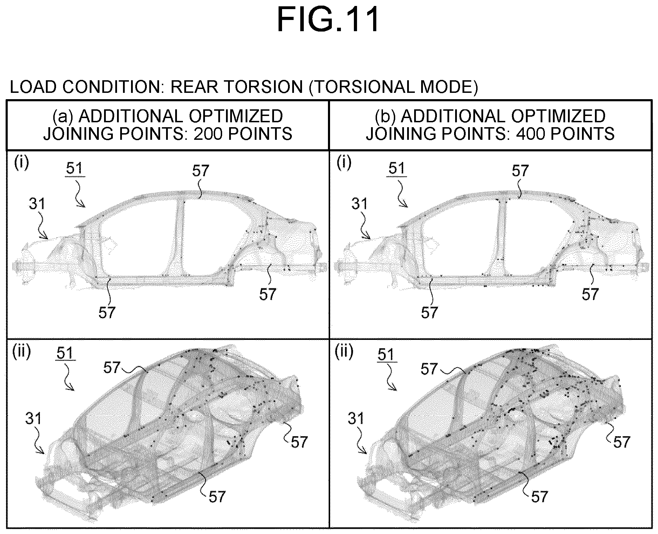

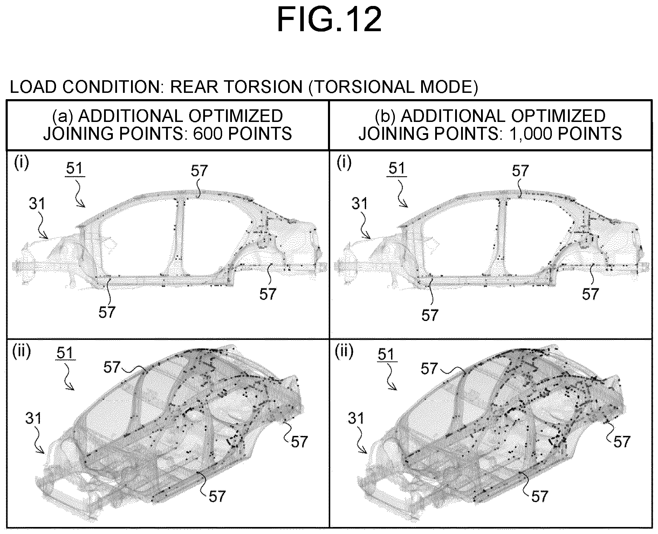

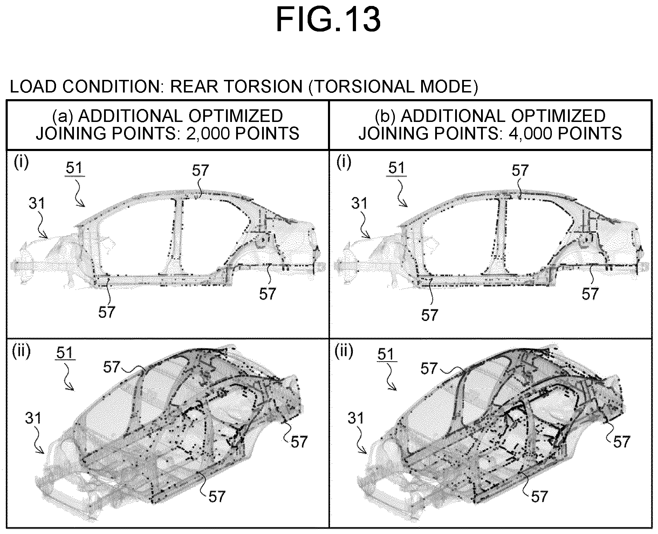

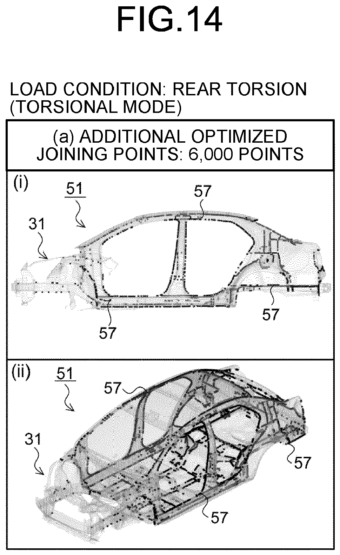

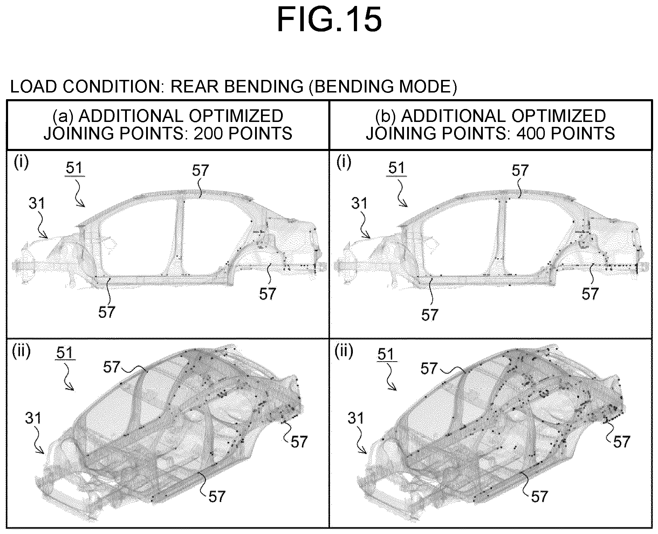

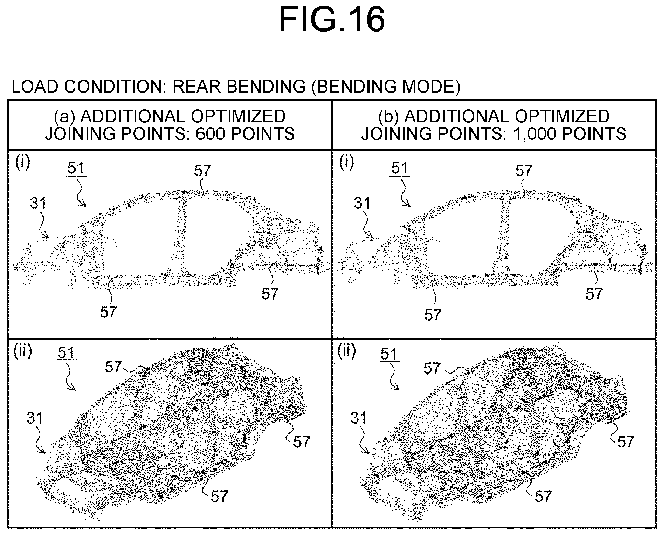

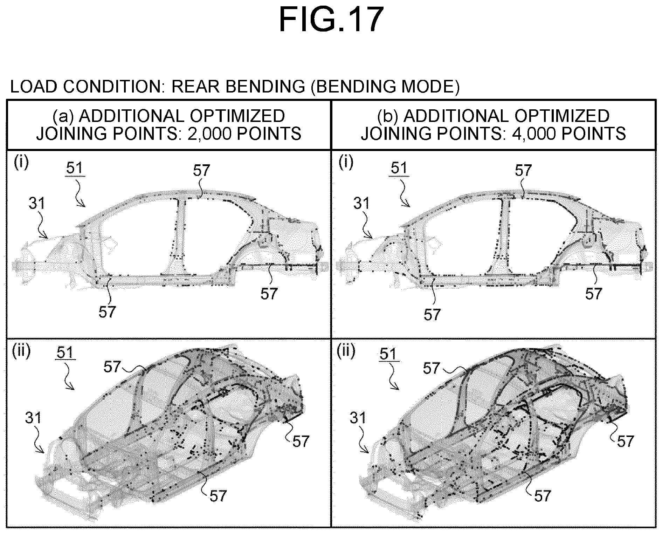

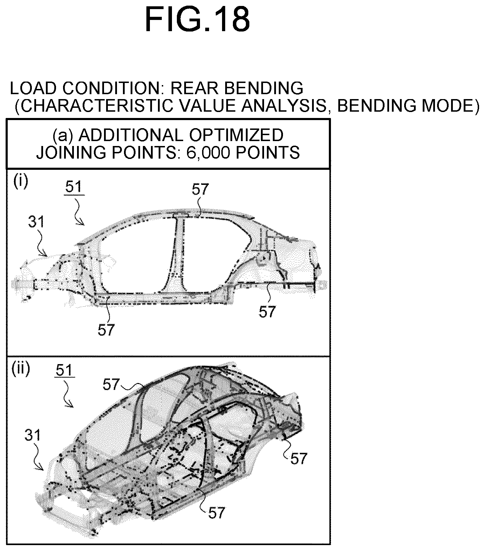

Then, under the given optimization analysis condition, the optimization analysis was performed with the additional joining candidates 53 of the optimization analysis model 51 targeted for optimization to determine the optimized joining points. In the present example, the number of points of the optimized joining points to be added were set to 200 points, 400 points, 600 points, 1,000 points, 2,000 points, 4,000 points, and 6,000 points. In the optimization analysis, the inertia force acting on the optimization analysis model 51 was taken into account by the inertia relief method. FIG. 11 to FIG. 14 illustrate the results of the optimized joining points 57 obtained by performing the optimization analysis by giving the load condition corresponding to the deformation form in the torsional mode, which is the vibration mode determined by the frequency response analysis. FIG. 15 to FIG. 18 illustrate the results of the optimized joining points 57 obtained by performing the optimization analysis by giving the load condition corresponding to the deformation form in the bending mode, which is the vibration mode determined by the frequency response analysis. In both cases in which the load condition corresponding to the deformation form in the torsional mode and the bending mode was given, optimal locations of point joining to be added to the automotive body model 31 were obtained in accordance with the number of points of the optimized joining points 57.

In addition, the frequency response analysis and the characteristic value analysis were performed on the optimization analysis model 51 with the optimized joining points 57 set to obtain the frequency response of the optimization analysis model 51 and a change in vibration characteristics due to the addition of the optimized joining points 57.

In the frequency response analysis of the optimization analysis model 51, an excitation condition inputting a sine wave load to the rear suspension mounting parts (the same locations as the rear suspension mounting parts 37 in the automotive body model 31 illustrated in FIG. 5(a)) in the automotive body up-and-down direction was given.

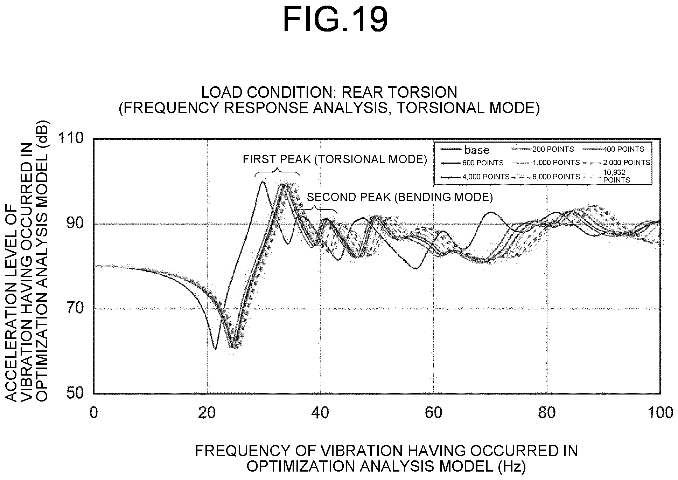

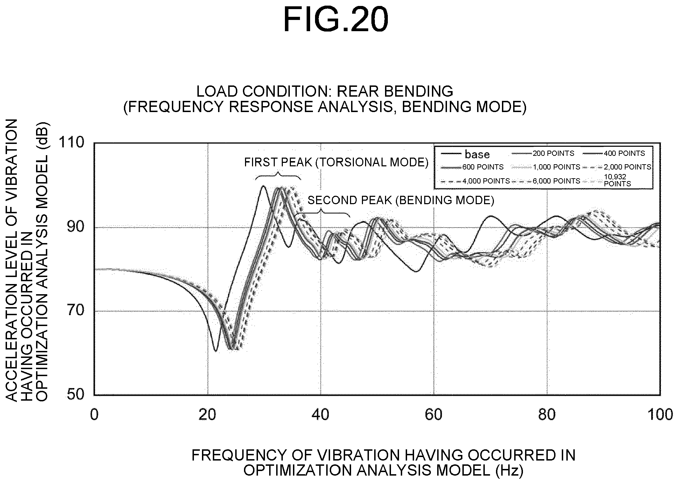

As examples of the result of the frequency response, FIG. 19 and FIG. 20 illustrate the results of the frequency response of the optimization analysis model 51 with the number of points of the optimized joining points 57 changed.

FIG. 19 is the results in the optimization analysis model 51 in which the optimized joining points 57 by the optimization analysis giving the load condition corresponding to the deformation form in the torsional mode (FIG. 3(a)) obtained by the frequency response analysis are set. FIG. 20 is the results in the optimization analysis model 51 in which the optimized joining points 57 determined by the optimization analysis giving the load condition corresponding to the deformation form in the bending mode (FIG. 3(b)) obtained by the frequency response analysis are set.

In FIG. 19 and FIG. 20, the horizontal axis is the frequency (Hz) of vibration having occurred in the optimization analysis model 51 in the frequency response analysis, whereas the vertical axis is the acceleration level (dB) of the vibration having occurred in the optimization analysis model 51. The base in these drawings is the result of the automotive body model 31 in which only the joining points 33 were set without setting the optimized joining points (FIG. 2(a)).

In the frequency response illustrated in FIG. 19 and FIG. 20, the first peak is the frequency of the torsional mode, whereas the second peak is the frequency in the vibration of the bending mode. In both cases giving the load condition corresponding to the deformation form in the torsional mode and the bending mode, the frequency of the torsional mode or the bending mode increased compared to that of the original automotive body model 31 by increasing the number of points of the optimized joining points 57. This indicates that adding the joining points to the locations of the optimized joining points 57 increases the frequency of the vibration occurring in the automotive body to improve the dynamic stiffness.

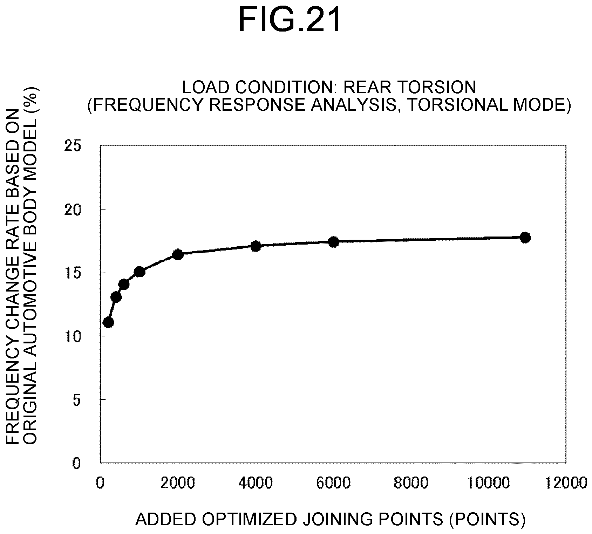

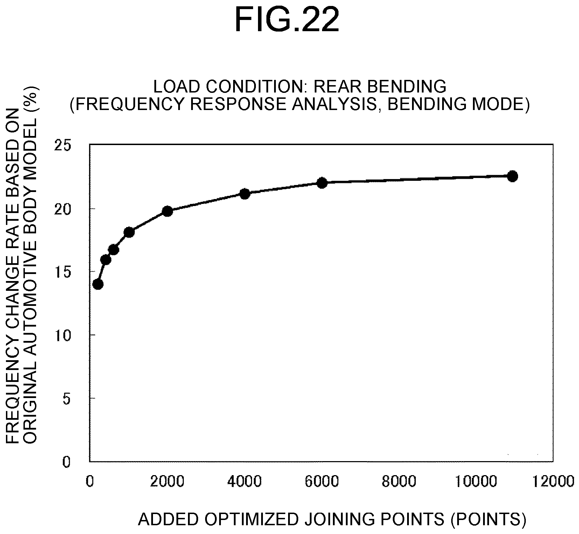

Furthermore, a relation between the number of points of the optimized joining points 57 set in the optimization analysis model 51 and the frequency of each of the torsional mode and the bending mode was studied. FIG. 21 and FIG. 22, setting the optimized joining points 57 by performing the optimization analysis by giving the load condition corresponding to the deformation form in the torsional mode and the bending mode determined by the frequency response analysis, illustrate the results of the frequency change rate of the torsional mode and the bending mode in the frequency response of the optimization analysis model 51.

In FIG. 21 and FIG. 22, the horizontal axis is the number of points of the optimized joining points 57 added to the optimization analysis model 51. The vertical axis in FIG. 21 and FIG. 22 is the frequency change rate of the torsional mode and the bending mode in the optimization analysis model 51 based on the original automotive body model 31.

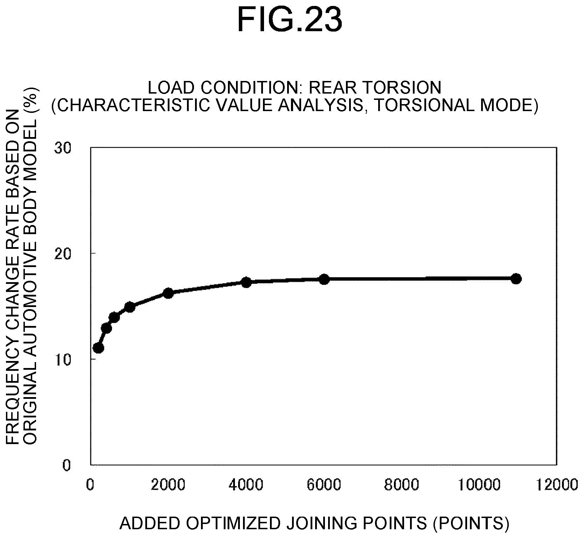

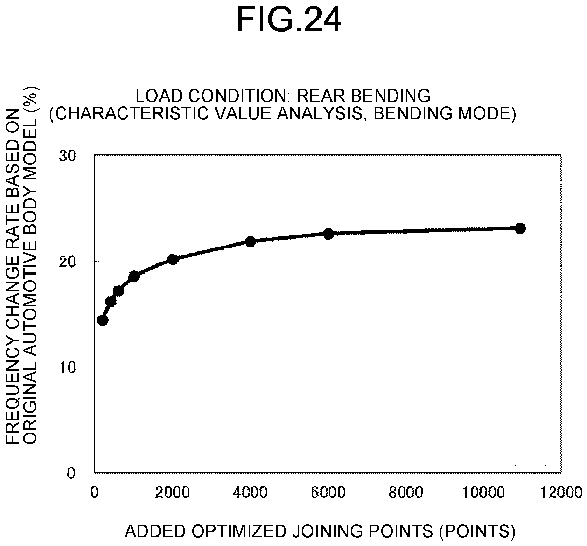

Similarly, FIG. 23 and FIG. 24, setting the optimized joining points 57 obtained by performing the optimization analysis by giving the load condition corresponding to the deformation form of each of the torsional mode and the bending mode determined by the characteristic value analysis, illustrate the results of the frequency change rate of the torsional mode and the bending mode in the frequency response of the optimization analysis model 51. The horizontal axis and the vertical axis in FIG. 23 and FIG. 24 are the same as those in FIG. 21 and FIG. 22 described above.

As illustrated in FIG. 21 and FIG. 22 and FIG. 23 and FIG. 24, the frequency change rate improved as the number of points of the optimized joining points 57 increased. Thus, for the improvement of the dynamic stiffness of the automotive body, the effect was obtained by adding the joining points to the locations of the optimized joining points 57. It turned out that the effect saturated as the number of points of the added joining points increased.

Industrial Applicability

The present invention can provide an optimization analysis method and an optimization analysis device for joining locations of an automotive body obtaining optimal locations of joining points or joining portions joining parts assemblies together in the automotive body in order to improve dynamic stiffness related to the vibration performance of the automotive body.

Reference Signs List

1    OPTIMIZATION ANALYSIS DEVICE
3    DISPLAY DEVICE
5    INPUT DEVICE
7    MEMORY STORAGE
9    WORKING DATA MEMORY
11   PROCESSOR
13   FREQUENCY RESPONSE ANALYSIS UNIT

15    LOAD CONDITION DETERMINATION UNIT
17    OPTIMIZATION ANALYSIS MODEL GENERATION UNIT
19    OPTIMIZATION ANALYSIS CONDITION SETTING UNIT
21    OPTIMIZATION ANALYSIS UNIT
23    AUTOMOTIVE BODY MODEL FILE
31    AUTOMOTIVE BODY MODEL
33    JOINING POINT
35    FRONT SUSPENSION MOUNTING PART
37    REAR SUSPENSION MOUNTING PART
39    FRONT SUBFRAME MOUNTING PART
41    REAR SUBFRAME MOUNTING PART
51    OPTIMIZATION ANALYSIS MODEL
53    JOINING CANDIDATE
55    PARTS ASSEMBLY
57    OPTIMIZED JOINING POINT
59    ERASING JOINING POINT
61    OPTIMIZATION ANALYSIS DEVICE
63    PROCESSOR
65    CHARACTERISTIC VALUE ANALYSIS UNIT

**Claims**

1.  An optimization analysis method for joining locations of an automotive body, the method causing a computer to perform, for an automotive body model of an automobile having a plurality of parts including a two-dimensional element and/or a three-dimensional element and having joining points or joining portions joining the parts together as a parts assembly, steps below to obtain optimized locations of point joining or continuous joining for use in joining the parts assemblies together, and the method comprising:

    a frequency response analysis step of giving a certain excitation condition to the automotive body model to perform frequency response analysis and obtaining a vibration mode occurring in the automotive body model and a deformation form in the vibration mode;
    a load condition determination step of determining a load condition to be given to the automotive body model corresponding to the deformation form in the obtained vibration mode;
    an optimization analysis model generation step of generating an optimization analysis model in which joining candidates to be candidates for joining the parts assemblies together are set in the automotive body model;
    an optimization analysis condition setting step of setting an optimization analysis condition for performing optimization analysis of the joining candidates in the generated optimization analysis model; and
    an optimization analysis step of giving the load condition determined at the load condition determination step to the optimization analysis model having set the optimization analysis condition to perform optimization analysis and obtaining the joining candidates satisfying the optimization analysis condition as optimized joining points or optimized joining portions joining the parts assemblies together.

2.  An optimization analysis method for joining locations of an automotive body, the method causing a computer to perform, for an automotive body model of an automobile having a plurality of parts including a two-dimensional element and/or a three-dimensional element and having joining points or joining portions joining the parts together as a parts assembly, steps below to obtain optimized locations of point joining or continuous joining for use in joining the parts assemblies together, and the method comprising:

    a characteristic value analysis step of performing characteristic value analysis of the automotive body model to obtain a vibration mode occurring in the automotive body model and a deformation form in the vibration mode;
    a load condition determination step of determining a load condition to be given to the automotive body model corresponding to the deformation form in the obtained vibration mode;
    an optimization analysis model generation step of generating an optimization analysis model in which joining candidates to be candidates for joining the parts assemblies together are set in the automotive body model;
    an optimization analysis condition setting step of setting an optimization analysis condition for performing optimization analysis of the joining candidates in the generated optimization analysis model; and
    an optimization analysis step of giving the load condition determined at the load condition determination step to the optimization analysis model having set the optimization analysis condition to perform optimization analysis and obtaining the joining candidates satisfying the optimization analysis condition as optimized joining points or optimized joining portions joining the parts assemblies together.

3. An optimization analysis device for joining locations of an automotive body, the device being configured to obtain, for an automotive body model of an automobile having a plurality of parts including a two-dimensional element and/or a three-dimensional element and having joining points or joining portions joining the parts together as a parts assembly, optimized locations of point joining or continuous joining for use in joining the parts assemblies together, and the device comprising:

a frequency response analysis unit configured to

give a certain excitation condition to the automotive body model to perform frequency response analysis, and obtain a vibration mode occurring in the automotive body model and a deformation form in the vibration mode;

a load condition determination unit configured to determine a load condition to be given to the automotive body model corresponding to the deformation form in the obtained vibration mode;
an optimization analysis model generation unit configured to generate an optimization analysis model in which joining candidates to be candidates for joining the parts assemblies together are set in the automotive body model;
an optimization analysis condition setting unit configured to set an optimization analysis condition for performing optimization analysis of the joining candidates in the generated optimization analysis model; and
an optimization analysis unit configured to

give the load condition determined by the load condition determination unit to the optimization analysis model having set the optimization analysis condition to perform optimization analysis, and obtain the joining candidates satisfying the optimization analysis condition as optimized joining points or optimized joining portions joining the parts assemblies together.

4. An optimization analysis device for joining locations of an automotive body, the device being configured to obtain, for an automotive body model of an automobile having a plurality of parts including a two-dimensional element and/or a three-dimensional element and having joining points or joining portions joining the parts together as a parts assembly, optimized locations of point joining or continuous joining for use in joining the parts assemblies together, and the device comprising:

a characteristic value analysis unit configured to perform characteristic value analysis of the automotive body model to obtain a vibration mode occurring in the automotive body model and a deformation form in the vibration mode;
a load condition determination unit configured to determine a load condition to be given to the automotive body model corresponding to the deformation form in the obtained vibration mode;
an optimization analysis model generation unit configured to generate an optimization analysis model in which joining candidates to be candidates for joining the parts assemblies together are set in the automotive body model;
an optimization analysis condition setting unit configured to set an optimization analysis condition for performing optimization analysis of the joining candidates in the generated optimization analysis model; and
an optimization analysis unit configured to

give the load condition determined by the load condition determination unit to the optimization analysis model having set the optimization analysis condition to perform optimization analysis, obtain the joining candidates satisfying the optimization analysis condition as optimized joining points or optimized joining portions joining the parts assemblies together.

# FIG.1

1

3 — DISPLAY DEVICE

5 — INPUT DEVICE

7 — MEMORY STORAGE

23 — AUTOMOTIVE BODY MODEL FILE

PROCESSOR — 11

FREQUENCY RESPONSE ANALYSIS UNIT — 13

LOAD CONDITION DETERMINATION UNIT — 15

OPTIMIZATION ANALYSIS MODEL GENERATION UNIT — 17

OPTIMIZATION ANALYSIS CONDITION SETTING UNIT — 19

OPTIMIZATION ANALYSIS UNIT — 21

WORKING DATA MEMORY — 9

# FIG.2

| (a) AUTOMOTIVE BODY MODEL (JOINING POINTS SET IN ADVANCE) | (b) OPTIMIZED ANALYSIS MODEL (ADDITIONAL JOINING CANDIDATES: 10,932 POINTS) |
|---|---|
| (i) | (i) |
| (ii) | (ii) |

# FIG.3

EP 4 145 329 A1

(a) FREQUENCY RESPONSE ANALYSIS:
TORSIONAL MODE
(DISPLAY MAGNIFICATION:200-FOLD)

(b) FREQUENCY RESPONSE ANALYSIS:
BENDING MODE
(DISPLAY MAGNIFICATION:200-FOLD)

# FIG.4

| (a) FRONT BENDING | (b) FRONT TORSION | (c) REAR BENDING | (d) REAR TORSION |
|---|---|---|---|
| | | | |
| (e) FRONT ONE WHEEL LOAD | (f) FRONT SIDE BENDING | (g) REAR ONE WHEEL LOAD | (h) REAR SIDE BENDING |
| | | | |

# FIG.5

(a) LOAD CONDITION

| (i) REAR TORSION | (ii) REAR BENDING |
|---|---|
| | |

(b) DEFORMATION STATE OF
AUTOMOTIVE BODY MODEL

DISPLAY MAGNIFICATION:200-FOLD

| (i) REAR TORSION | (ii) REAR BENDING |
|---|---|
| | |

FIG.6

# FIG.7

```
        ┌─────────────────┐
        │      START      │
        └─────────────────┘
                 │
                 ▼
┌───────────────────────────────────────────┐
│    FREQUENCY RESPONSE ANALYSIS STEP        │      S1
└───────────────────────────────────────────┘
                 │
                 ▼
┌───────────────────────────────────────────┐
│    LOAD CONDITION DETERMINATION STEP       │      S3
└───────────────────────────────────────────┘
                 │
                 ▼
┌───────────────────────────────────────────┐
│  OPTIMIZATION ANALYSIS MODEL GENERATION STEP │    S5
└───────────────────────────────────────────┘
                 │
                 ▼
┌───────────────────────────────────────────┐
│ OPTIMIZATION ANALYSIS CONDITION SETTING STEP │    S7
└───────────────────────────────────────────┘
                 │
                 ▼
┌───────────────────────────────────────────┐
│       OPTIMIZATION ANALYSIS STEP           │      S9
└───────────────────────────────────────────┘
                 │
                 ▼
        ┌─────────────────┐
        │       END       │
        └─────────────────┘
```

# FIG.8

# FIG.9

```
                    ┌─────────────┐
                    │    START    │
                    └──────┬──────┘
                           │
                           ▼
┌──────────────────────────────────────────────┐
│       CHARACTERISTIC VALUE ANALYSIS STEP       │ ～～ S11
└──────────────────────┬───────────────────────┘
                       ▼
┌──────────────────────────────────────────────┐
│       LOAD CONDITION DETERMINATION STEP        │ ～～ S3
└──────────────────────┬───────────────────────┘
                       ▼
┌──────────────────────────────────────────────┐
│   OPTIMIZATION ANALYSIS MODEL GENERATION STEP  │ ～～ S5
└──────────────────────┬───────────────────────┘
                       ▼
┌──────────────────────────────────────────────┐
│  OPTIMIZATION ANALYSIS CONDITION SETTING STEP  │ ～～ S7
└──────────────────────┬───────────────────────┘
                       ▼
┌──────────────────────────────────────────────┐
│          OPTIMIZATION ANALYSIS STEP            │ ～～ S9
└──────────────────────┬───────────────────────┘
                       ▼
                 ┌─────────────┐
                 │     END     │
                 └─────────────┘
```

# FIG.10

(a) CHARACTERISTIC VALUE ANALYSIS:
TORSIONAL MODE
(DISPLAY MAGNIFICATION:200-FOLD)

(b) CHARACTERISTIC VALUE ANALYSIS:
BENDING MODE
(DISPLAY MAGNIFICATION:200-FOLD)

# FIG.11

LOAD CONDITION: REAR TORSION (TORSIONAL MODE)

| (a) ADDITIONAL OPTIMIZED JOINING POINTS: 200 POINTS | (b) ADDITIONAL OPTIMIZED JOINING POINTS: 400 POINTS |
|---|---|
| (i) | (i) |
| (ii) | (ii) |

25

# FIG.12

LOAD CONDITION: REAR TORSION (TORSIONAL MODE)

| (a) ADDITIONAL OPTIMIZED JOINING POINTS: 600 POINTS | (b) ADDITIONAL OPTIMIZED JOINING POINTS: 1,000 POINTS |
|---|---|
| (i) 51 57 31 57 57 | (i) 51 57 31 57 57 |
| (ii) 51 57 31 57 57 | (ii) 51 57 31 57 57 |

# FIG.13

LOAD CONDITION: REAR TORSION (TORSIONAL MODE)

| (a) ADDITIONAL OPTIMIZED JOINING POINTS: 2,000 POINTS | (b) ADDITIONAL OPTIMIZED JOINING POINTS: 4,000 POINTS |
|---|---|
| (i) | (i) |
| (ii) | (ii) |

# FIG.14

LOAD CONDITION: REAR TORSION
(TORSIONAL MODE)

| (a) ADDITIONAL OPTIMIZED JOINING POINTS: 6,000 POINTS |
|---|

(i)

(ii)

# FIG.15

LOAD CONDITION: REAR BENDING (BENDING MODE)

| (a) ADDITIONAL OPTIMIZED JOINING POINTS: 200 POINTS | (b) ADDITIONAL OPTIMIZED JOINING POINTS: 400 POINTS |
|---|---|
| (i) | (i) |
| (ii) | (ii) |

# FIG.16

LOAD CONDITION: REAR BENDING (BENDING MODE)

| (a) ADDITIONAL OPTIMIZED JOINING POINTS: 600 POINTS | (b) ADDITIONAL OPTIMIZED JOINING POINTS: 1,000 POINTS |
|---|---|
| | |
| | |

# FIG.17

LOAD CONDITION: REAR BENDING (BENDING MODE)

| (a) ADDITIONAL OPTIMIZED JOINING POINTS: 2,000 POINTS | (b) ADDITIONAL OPTIMIZED JOINING POINTS: 4,000 POINTS |
|---|---|
| | |
| | |

# FIG.18

LOAD CONDITION: REAR BENDING
(CHARACTERISTIC VALUE ANALYSIS, BENDING MODE)

(a) ADDITIONAL OPTIMIZED
JOINING POINTS: 6,000 POINTS

# FIG.19

LOAD CONDITION: REAR TORSION
(FREQUENCY RESPONSE ANALYSIS, TORSIONAL MODE)

# FIG.20

LOAD CONDITION: REAR BENDING
(FREQUENCY RESPONSE ANALYSIS, BENDING MODE)

EP 4 145 329 A1

# FIG.21

LOAD CONDITION: REAR TORSION
(FREQUENCY RESPONSE ANALYSIS, TORSIONAL MODE)

(Y-axis) FREQUENCY CHANGE RATE BASED ON ORIGINAL AUTOMOTIVE BODY MODEL (%)

(X-axis) ADDED OPTIMIZED JOINING POINTS (POINTS)

35

# FIG.22

LOAD CONDITION: REAR BENDING
(FREQUENCY RESPONSE ANALYSIS, BENDING MODE)

FREQUENCY CHANGE RATE BASED ON
ORIGINAL AUTOMOTIVE BODY MODEL (%)

ADDED OPTIMIZED JOINING POINTS (POINTS)

# FIG.23

LOAD CONDITION: REAR TORSION
(CHARACTERISTIC VALUE ANALYSIS, TORSIONAL MODE)

Y-axis: FREQUENCY CHANGE RATE BASED ON ORIGINAL AUTOMOTIVE BODY MODEL (%)

X-axis: ADDED OPTIMIZED JOINING POINTS (POINTS)

# FIG.24

LOAD CONDITION: REAR BENDING
(CHARACTERISTIC VALUE ANALYSIS, BENDING MODE)

## INTERNATIONAL SEARCH REPORT

| International application No. |
|---|
| PCT/JP2020/044637 |

### A. CLASSIFICATION OF SUBJECT MATTER
Int.Cl. G06F30/20(2020.01)i, G01M7/02(2006.01)i, G06F30/10(2020.01)i
FI: G06F17/50612G, G06F17/50604A, G06F17/50680Z, G01M7/02J

According to International Patent Classification (IPC) or to both national classification and IPC

### B. FIELDS SEARCHED

Minimum documentation searched (classification system followed by classification symbols)
Int.Cl. G06F30/00-30/28, G01M7/00-7/08, G01M17/007

Documentation searched other than minimum documentation to the extent that such documents are included in the fields searched
    Published examined utility model applications of Japan       1922-1996
    Published unexamined utility model applications of Japan     1971-2021
    Registered utility model specifications of Japan             1996-2021
    Published registered utility model applications of Japan     1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 8-083303 A (SUZUKI MOTOR CORP.) 26 March 1996 (1996-03-26), paragraphs [0057]-[0079] | 1-4 |
| Y | JP 2014-149734 A (JFE STEEL CORPORATION) 21 August 2014 (2014-08-21), paragraphs [0020]-[0044] | 1-4 |
| Y | JP 2003-090758 A (TORAY INDUSTRIES, INC.) 28 March 2003 (2003-03-28), paragraphs [0002]-[0006] | 1, 3 |
| A | | 2, 4 |

☐ Further documents are listed in the continuation of Box C.      ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 February 2021 | 16 February 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

| INTERNATIONAL SEARCH REPORT | International application No. |
|---|---|
| Information on patent family members | PCT/JP2020/044637 |

JP 8-083303 A      26 March 1996      (Family: none)

JP 2014-149734 A   21 August 2014     (Family: none)

JP 2003-090758 A   28 March 2003      (Family: none)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010250818 A